Europäisches Patentamt

European Patent Office

Office européen des brevets

(19)

(11) Veröffentlichungsnummer: **0 190 092**
**B1**

## EUROPÄISCHE PATENTSCHRIFT

(12)

(45) Veröffentlichungstag der Patentschrift:
**22.03.89**

(51) Int. Cl.⁴: **F 16 L  15/00, E 21 B  17/042**

(21) Anmeldenummer: **86730003.0**

(22) Anmeldetag: **09.01.86**

(54) **Ölfeldrohr.**

(30) Priorität: **31.01.85  DE 3503494**

(43) Veröffentlichungstag der Anmeldung:
**06.08.86 Patentblatt 86/32**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**DE-A- 3 300 450**
**US-A- 3 100 656**
**US-A- 3 336 054**
**US-A- 4 026 583**

(73) Patentinhaber: **MANNESMANN Aktiengesellschaft,
Mannesmannufer 2, D-4000 Düsseldorf 1 (DE)**

(72) Erfinder: **Estrich, Wulf, Kruse Boom 42, D-4156 Willich
(DE)**
Erfinder: **Versch, Josef, Dipl.-Ing., Görlitzer Strasse 6,
D-4040 Neuss (DE)**

(74) Vertreter: **Meissner, Peter E., Dipl.-Ing. et al, Meissner &
Meissner Patentanwälte Herbertstrasse 22,
D-1000 Berlin 33 Grunewald (DE)**

ACTORUM AG

## Beschreibung

Die Erfindung betrifft ein Ölfeldrohr gemäss dem Gattungsbegriff des Patentanspruchs. Ölfeldrohre sind grossen Korrosionsbelastungen ausgesetzt, wenn sie in heute vielfach vorhandenen sauren Bohrfeldern eingesetzt sind. Zu den Ölfeldrohren gehören in diesem Zusammenhang alle Futterrohre, Steigrohre, Gestängerohre und Leitungsrohre. Derartige Rohre müssen überwiegend viele Jahre den genannten Korrosionsangriffen widerstehen.

Für diese hohen Anforderungen sind schon Rohre aus korrosionsbeständigen Stahllegierungen mit hohem Nickelanteil bekannt, die aber sehr teuer und wegen der langanhaltenden weltweiten Nickelknappheit nicht unbeschränkt verfügbar sind.

Es ist bekannt, Rohre aus nicht korrosionsbeständigem Stahl mit einem korrosionsbeständigem Überzug zu versehen, beispielsweise mit korrosionsfestem Stahl zu plattieren oder mit Kunststoff zu überziehen, wie es der US-A 3 100 656 zu entnehmen ist. So beschaffene Rohre erliegen dem Korrosionsangriff aber auch sehr schnell, da die Plattierung nicht über den Rohrstoss hinweg reicht. Kunststoffüberzüge werden ggf. über den Stoss des Rohres hinweggezogen und dadurch beim Zusammenschrauben eingespannt und verquetscht. Sie werden dadurch leicht mediendurchlässig.

Ausserdem wird die Kunststoffbeschichtung am Rohrende beim Verschrauben leicht auf dem Rohr verschoben, löst sich ab und wird unterrostet.

Aus der US-A 3 336 054 ist ein Ölfeldrohr mit an beiden Enden angeordneten Verbindern bekannt. Die Verbinder bestehen aus korrosionsbeständigem Werkstoff, während die Rohre selbst eine korrosionsbeständige Innenbeschichtung aufweisen.

Aufgabe der Erfindung ist es, ein Ölfeldrohr zu schaffen, das preisgünstig möglichst in gewohnter Weise hergestellt werden kann, wobei insbesondere die Beschichtung randfest mit dem Rohr verbunden ist, um das Stahlrohr vor korrosiven Angriffen zu schützen.

Die Aufgabe wird durch ein Ölfeldrohr mit den Merkmalen des Anspruchs gelöst.

Das Anschweissen von Verbindern an Stahlrohre ist bei der Herstellung von Bohrrohren üblich. Das Verschweissen erfolgt beispielsweise durch Reibschweissung. Die Werkstoffkombination unlegierten Stahls mit maximal 2% Mangan und rostfreier Stahllegierung bereitet bei dieser Art Schweissung keinerlei Schwierigkeiten.

Der Kunststoff wird durch Extrudieren auf die Rohroberfläche aufgebracht. Die Beschichtung reicht nicht bis an die Stirnfläche der Verbinder, damit die Schichten beim Zusammenfügen der Rohre nicht aufeinandergepresst werden, sich gegenseitig verschieben und von der Rohroberfläche ablösen. Die Schutzbeschichtung reicht mindestens über zwei Drittel bis höchstens neun Zehntel der Verbindungslänge.

Es ist nicht notwendig, dass das Ende der Beschichtung in einem Querschnitt zur Rohrachse verläuft. Es kann auf der einen Rohrseite weiter bis an das Ende des Rohres reichen als auf der anderen. Es kann auch Lappen bilden. Das Ende der Beschichtung ist abgeschrägt. Die Beschichtungsdicke wird, da es sich meistens um nahtlose Rohre handelt, in der Regel einige Zehntel Millimeter nicht überschreiten.

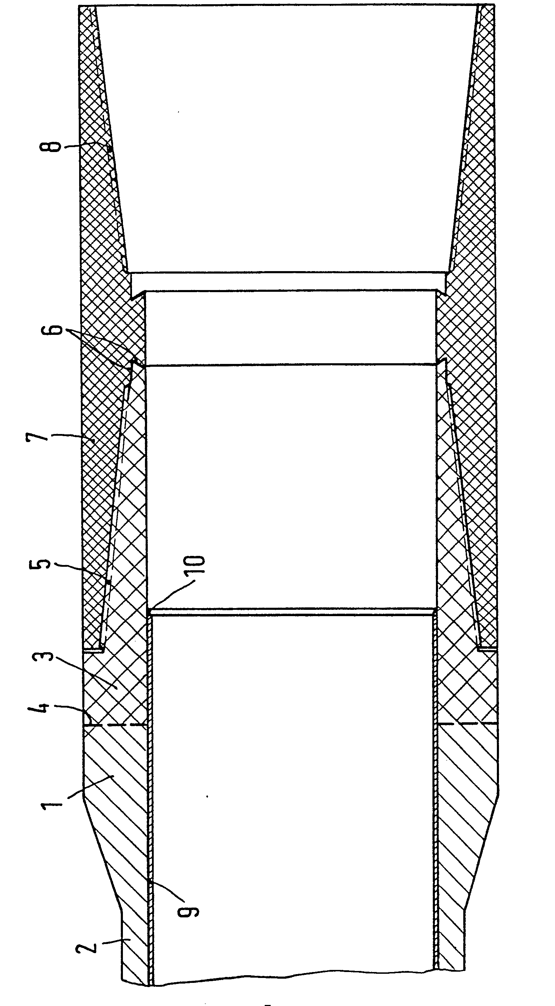

Ein Ausführungsbeispiel nach der Erfindung zeigt die Figur schematisch.

Bei dem Ausführungsbeispiel handelt es sich um ein Ölfeldrohr bestehend aus einem an dem Ende 1 verdickten dünnwandigen nahtlosen Stahlrohr 2 aus hochfestem Kohlenstoffstahl und einem Verbinder 3 aus rostfreiem Stahl. Rohr 1, 2 und Verbinder 3 sind durch Reibschweissen an der Stelle 4 miteinander verbunden. Der Verbinder 3 trägt endseitig ein Kegelgewinde 5 und Dicht- und Schulterflächen 6. Auf dem Verbinder 3 ist eine Muffe 7 aufgeschraubt. Am anderen Ende der Muffe 7 ist ebenfalls ein Kegelgewinde 8 vorgesehen, in das ein weiteres Ölfeldrohr eingeschraubt wird. Durch Verschrauben von mehreren Rohren und Muffen entsteht dann ein Rohrstrang, mit dem eine Bohrung ausgerüstet wird.

Bei der Herstellung der einzelnen Rohre durch Reibschweissung an der Stelle 4 ist darauf zu achten, dass der entstehende Grat innen und aussen sauber abgearbeitet wird. Ausserdem werden die Rohre innen gesandstrahlt und danach innen mit der Beschichtung 9 versehen. Die Beschichtung 9 erfolgt bei erhöhter Temperatur. Bei PTFE beträgt die Temperatur kanpp 300 °C. Das Auftragen der Beschichtung 9 erfolgt durch einen durch das Rohr hindurchgeführten Extruderkopf, der auf den Innendurchmesser des Ölfeldrohres abgestimmt ist. Das Extrudieren wird begonnen, wenn der Presschlitz des Extruders in dem Verbinder 3 steht und wird dann ohne Unterbrechung fortgesetzt, bis der Presschlitz in den Verbinder am anderen Rohrende angekommen ist. Ansatz 10 und Auslauf der Beschichtung werden zu einem Übergang geglättet, damit von der Übergangsstelle wenig Störung auf die durchströmende Flüssigkeit ausgeht.

## Patentanspruch

1. Ölfeldrohr (2) aus nicht rostbeständigem Stahl oder einer entsprechenden Stahllegierung, mit einer Innenbeschichtung (9) aus korrosionsbeständigem Material und mit an beiden Enden angeordneten Verbindern (3) aus korrosionsbeständigem metallischen Werkstoff, die bspw. mit Schweissphasen oder Gewinden (5) und auch mit Dichtungs- und/oder Schulterflächen (6) versehen sind, wobei die Innenbeschichtung (9) auf den Verbindern (3) ausläuft, dadurch gekennzeichnet, dass die Innenbeschichtung (9) aus PTFE besteht, das bei einer Temperatur von ca. 300 °C mittels eines durch das Rohr (2) hindurchgeführten Extruderkopfes aufgebracht worden ist, dass der Ansatz (10) und der Auslauf (10) der Beschichtung (9) einen geglätteten Übergang aufweisen und dass sich die Beschichtung (9) mindestens über zwei Drittel bis höchstens neun Zehntel der Länge des Verbinders (3) erstreckt.

## Revendication

Tube pour champs pétrolifères (2) fait d'un acier non résistant à la corrosion, ou d'un alliage d'acier de même type, muni d'un revêtement intérieur (9) fait d'une matière résistante à la corrosion, et de raccords (3) fait d'une matière métallique résistante à la corrosion, prévu aux deux extrémités, et qui sont munis, par exemple, de chanfreins de soudage et de filetages (5) et également de surfaces d'étanchéité et/ou d'épaulement (6), le revêtement intérieur (9) se terminant sur les raccords (3), caractérisé en ce que le revêtement intérieur (9) es composé de PTFE, qui a été déposé à une température d'environ 300 °C, au moyen d'une tête d'extrudeuse qu'on a enfilée dans le tube (2), en ce que l'amorce (10) et la fin (10) du revêtement (9) présentent un raccordement lissé et en ce que le revêtement (9) s'étend au moins sur les deux tiers et au maximum sur les neuf dixièmes de la longueur du raccord (3).

## Claim

An oilfield pipe (2) made from non-rust-resistant steel or an appropriate steel alloy, with an inner coating (9) of corrosion-resistant material and with connectors (3) made from corrosion-resistant metallic material disposed on both ends, which for instance are provided with weld phases or threads (5) and also with sealing and/or shoulder surfaces (6), the inner coating (9) running out on the connectors (3), characterised in that the inner coating (9) consists of PTFE which has been applied at a temperature of approximately 300 °C by means of an extruder head passed through the pipe (2), that the start (10) and end (10) of the coating (9) have a smoothed transition and that the coating (9) extends over at least two thirds up to a maximum of nine tenths of the length of the connector (3).

1/1